# EUROPÄISCHE PATENTANMELDUNG

(11) **EP 3 085 495 A2**
(43) Veröffentlichungstag der Anmeldung: **26.10.2016**
(21) Anmeldenummer: 15197979.6
(22) Anmeldetag: 04.12.2015
(51) Int. Cl.: B25B 1/02, B23B 31/00, B25B 1/24

(54) **ULTRALEICHT-SPANNVORRICHTUNG**

(30) Priorität: 04.03.2015 DE 102015103122
(71) Anmelder: Röhm GmbH, 89567 Sontheim (DE)
(72) Erfinder: Schweigert, Eduard, 89428 Syrgenstein (DE)
(74) Vertreter: Hentrich Patentanwälte PartG mbB

(57) **Zusammenfassung**

Spannvorrichtung (1) zum Spannen eines Werkstücks, mit einem Grundkörper (2) und mindestens einem relativ zum Grundkörper (2) verstellbaren Spannmittel. Im Grundkörper (2) ist mindestens ein Hohlraum (3) ausgebildet, wobei im Hohlraum (3) ein Mittel zur Versteifung durch ausgebildet ist.

## Beschreibung

Die Erfindung betrifft eine Spannvorrichtung zum Spannen eines Werkstückes mit einem Grundkörper und mindestens einem relativ zum Grundkörper verstellbaren Spannmittel.

Derartige Spannvorrichtungen sind aus der Praxis bekannt, wobei diese Spannvorrichtungen um eine hohe Belastbarkeit zu erzielen durch eine äußerst massive Bauweise gekennzeichnet sind, d.h. mit einem hohen Gewicht einhergehen. Aufgrund des massiven Aufbaus werden Vibrationen nahezu ungedämpft innerhalb des Grundkörpers der Spannvorrichtung geführt und auf das Werkstück übertragen. Dies führt zu einer höheren Abnutzung der Spannvorrichtung und kann die Bearbeitung bzw. den Transport empfindlicher Werkstücke einschränken.

Bei Spannfuttern hat das hohe Gewicht zudem den Nachteil, dass die zu erreichende Drehzahl abhängig vom Trägheitsmoment und damit von der Masse des Spannfutters bzw. der Massenverteilung im Spannfutter ist. Die maximale Leistung bzw. die maximal zu erreichende Drehzahl ist somit u.a. durch die Masse der Spannvorrichtungen beschränkt.

Der Erfindung liegt daher die Aufgabe zugrunde, eine Spannvorrichtung der eingangs genannten Art derart weiterzubilden, dass eine Steigerung der Leistung bei gleichzeitig hoher Belastbarkeit erreicht wird.

Dieser Aufgabe wird nach der Erfindung bei einer Spannvorrichtung der eingangs genannten Art dadurch gelöst, dass im Grundkörper mindestens ein Hohlraum ausgebildet ist und dass im Hohlraum ein Mittel zur Versteifung durch Kompartimentierung ausgebildet ist. Durch die Ausbildung mindestens eines Hohlraums kommt es zu einer Gewichtsreduktion der Spannvorrichtung. Somit kann beispielsweise bei einem Spannfutter die zu erreichende maximale Drehzahl aufgrund des reduzierten Trägheitsmoments erhöht werden, wodurch u.a. beim Einsatz des Spannfutters kürzere Taktzeiten bei der Fertigung erreicht werden. Um weiterhin eine hohe Belastbarkeit und damit eine lange Lebensdauer der Spannvorrichtung garantieren zu können, ist im Hohlraum ein Mittel zur Versteifung durch Kompartimentierung gebildet. Die Kompartimentierung bewirkt weiterhin ein geringes Gewicht und ermöglicht, dass Vibrationen im Grundkörper gedämpft werden. Im Rahmen der Erfindung ist es besonders bevorzugt, dass im Grundkörper mehrere Hohlräume ausgebildet sind und dass zumindest einer der Hohlräume ein Mittel zur Versteifung durch Kompartimentierung aufweist. Dabei ist es prinzipiell vorgesehen, dass der Volumenteil des Grundkörpers, der beim Gebrauch der Spannvorrichtung nicht hoch belastet ist in Form von einem oder mehrerer Hohlräume gebildet ist. Die Spannvorrichtung kann beispielsweise als Spannfutter, als Greifer oder als Schraubstock gebildet sein.

Prinzipiell ist es möglich, die Hohlräume im Grundkörper durch Bohrungen durch Fräsen oder andere Verfahren zu bilden, allerdings ist es im Rahmen der Erfindung besonders bevorzugt, dass der Grundkörper schichtweise durch ein generatives Fertigungsverfahren gebildet ist. Die Bildung des Grundkörpers durch ein generatives Fertigungsverfahren hat den Vorteil, dass alle für die Funktion der Spannvorrichtung relevanten Grundstrukturen in einem 3D-Modell zusammengefasst werden können und in einem Fertigungsschritt gefertigt werden können. Die herkömmliche Fertigung einer Spannvorrichtung umfasst dagegen mehrere Fertigungsschritte. Gleichzeitig ist es möglich, über ein generatives Fertigungsverfahren zusätzliche Funktionen in den Grundkörper zu integrieren sowie die Ausbildung des Grundkörpers an die gestellten Anforderungen individuell anzupassen. In diesem Zusammenhang ist es besonders bevorzugt, dass der Grundkörper schichtweise über Laserstrahlschmelzen gebildet ist. Allerdings sind auch andere generative Fertigungsverfahren wie beispielsweise das Lasersintern und Elektronenstrahlschmelzen möglich. Darüber hinaus ist es vorteilhaft, wenn die Grundstrukturen des Grundkörpers möglichst flach gefertigt werden, da die Fertigungskosten bei generativen Fertigungsverfahren von der Höhe des zu fertigenden Stücks abhängen. In diesem Zusammenhang ist auch denkbar, den Grundkörper nicht einteilig, sondern mehrteilig zu bilden, um die einzelnen Teile in einem weiteren Fertigungsschritt miteinander zu verbinden (beispielsweise durch Schweißen). Weiterhin ist es günstig, wenn der Grundkörper aus einem Material gebildet ist, das ausgewählt ist aus der Gruppe von: Edelstahl, Aluminium, Aluminiumlegierungen, Werkzeugstahl, Titan, Titanlegierungen, Chrom-Kobalt-Molybdän-Legierungen, Bronze-Legierungen, Edelmetall-Legierungen, Nickelbasis-Legierungen, Keramik, Kunststoff und Inconell. Ganz besonders bevorzugt ist es, wenn der Grundkörper aus Titan gebildet ist.

Weiterhin hat es sich als günstig erwiesen, dass der Grundkörper randseitig durch eine Außenwandung begrenzt ist und eine Bodenplatte aufweist, auf der zur Begrenzung des mindestens einen Hohlraums eine Innenwandung angeordnet ist. Dies führt zu einer zusätzlichen Stabilisierung des Grundkörpers und erleichtert die Ausbildung des Mittels zur Versteifung durch Kompartimentierung im Hohlraum.

Ganz besonders vorteilhaft ist es, wenn das Mittel zur Versteifung durch Kompartimentierung durch einen Metallschaum gebildet ist. Dadurch werden die Hohlräume zusätzlich stabilisiert und damit widerstandsfähiger gemacht, wobei gleichzeitig, durch die im Metallschaum vorhandenen Poren, eine erheblich Gewichtsreduktion im Vergleich zu herkömmlichen Spannvorrichtungen erreicht wird. Somit wird durch die Ausbildung der Hohlräume und die Füllung derselben mit Metallschaum eine Gewichtsreduktion der Spannvorrichtung bei gleichzeitig hoher Belastbarkeit und somit langer Lebensdauer erreicht. In diesem Zusammenhang ist es vorgesehen, dass der Metallschaum aus einem Treibmittelaktivierbaren Metallpulver gebildet ist, wobei das Metallpulver ausgewählt ist, aus der Gruppe von Aluminium, Aluminiumlegierungen, Kupfer, Zink, Blei, Stahl, Titan und Eisen. Besonders bevorzugt ist dabei aufgrund des geringen Gewichts die Kombination aus Aluminium als Metall und Titanhydrid als Treibmittel einzusetzen. Dabei werden das Aluminium und das Titanhydrid zu Metallplättchen verdichtet und diese in die vorhandenen Hohlräume gefüllt. Durch Erhitzen der Spannvorrichtung auf ca. 500°C entsteht der Aluminiumschaum in den Hohlräumen. Dabei ist es bei der Fertigung zweckmäßig, möglichst gleichmäßige Poren zu erreichen. Dies spielt speziell bei runden, rotierenden Grundkörpern eine Rolle, um eine Rotationssymmetrie des Grundkörpers zu erhalten. In diesem Zusammenhang ist es vorgesehen, dass die Oberfläche des Grundkörpers begradigt ist und im Falle von runden Grundkörpern ausgewuchtet ist. Alternativ ist vorgesehen, dass das Mittel zur Versteifung durch eine an der Innenwandung angeschlossene Struktur gebildet ist. Die Ausbildung einer Struktur hat den Vorteil, dass das Mittel zur Versteifung im selben Fertigungsschritt wie bei der schichtweisen Erstellung des Grundkörpers durch das generative Fertigungsverfahren gebildet werden kann. Analog zu den Vorteilen, die mittels des Einsatzes von Metallschaum erzielt werden können, werden durch die Ausbildung einer Struktur in den Hohlräumen diese stabilisiert und die Spannvorrichtung somit belastbarer, während gleichzeitig das Gewicht der Spannvorrichtung reduziert wird. Die Struktur kann dabei beispielsweise durch eine Wabenstruktur oder eine bionische Struktur gebildet sein. Unter einer Wabenstruktur kann dabei eine regelmäßige symmetrische Struktur analog zu einer Bienenwabe verstanden werden, allerdings sind auch andere Formen wie runde oder asymmetrische Formen möglich, sowie auch eine Mischung aus verschiedenen Formen denkbar. Die Ausbildung der Struktur kann dabei individuell an die auf den Hohlraum wirkenden Kräfte angepasst werden.

Im Rahmen der Erfindung ist es insbesondere vorgesehen, dass die Spannvorrichtung als Spannfutter gebildet ist und dass der Grundkörper als Futterkörper gebildet ist mit einer Spindelaufnahme und mit mindestens zwei gleichmäßig über den Umfang verteilten, durch die Innenwandung begrenzten Führungsaufnahmen für die Verstellung von Spannbacken und dass zwischen der Außenwandung und der Innenwandung der mindestens eine Hohlraum gebildet ist. Speziell bei Spannfuttern führt die durch die Ausbildung des Hohlraums hervorgerufene Gewichtsreduktion des Grundkörpers zu einer Leistungssteigerung des Spannfutters, da höhere maximale Drehzahlen erreicht werden können. Dabei ist es möglich, zwischen der Außenwandung und der Innenwandung beliebig viele Hohlräume auszubilden, die durch die Innenwandung voneinander getrennt sind. Denkbar ist es, dass bei mindestens einem der Hohlräume das Mittel zur Versteifung ausgebildet ist. Besonders bevorzugt ist es allerdings, wenn bei allen Hohlräumen das Mittel zur Versteifung ausgebildet ist. Dabei ist zu beachten, dass bei runden Grundkörpern, also im Falle von Spannfuttern, die Hohlräume zwischen Innenwandung und Außenwandung rotationssymmetrisch angeordnet sein müssen. Bei einer Ausführungsform, in der nicht alle Hohlräume das Mittel zur Versteifung aufweisen, muss ebenfalls eine Rotationssymmetrie eingehalten werden.

Ganz besonders vorteilhaft ist es, wenn jeder Führungsaufnahme zwei gegenüberliegende Führungsflächen zugeordnet sind, wenn der Futterkörper ein erstes Leitungssystem zur Schmierung umfasst mit einer in Umfangsrichtung verlaufenden Zentralleitung, wenn jeder Führungsfläche eine mit der Zentralleitung verbundene Zufuhrleitung zugeordnet ist, die eine in Richtung der Führungsaufnahme geöffnete Schmieröffnung aufweist. Dies ermöglicht eine kontinuierliche Schmierung der Spannbacken, wodurch die Spannkraft des Spannfutters erhöht wird und Verschleißerscheinungen reduziert werden.

Aufgrund der Bildung des Grundkörpers durch ein generatives Fertigungsverfahren sind viele verschiedene Anordnungen und Ausbildungen des Leitungssystems möglich. Dabei ist es besonders bevorzugt, wenn die Zentralleitung in Umfangsrichtung entlang der Außenwandung des Grundkörpers geführt ist. Darüber hinaus ist im Rahmen der Erfindung vorgesehen, dass die Zufuhrleitung verzweigt ist in eine Mehrzahl von Schmieröffnungen. Dabei ist es besonders vorteilhaft, wenn die Zufuhrleitung parallel zur Führungsfläche verläuft und die Schmieröffnungen in regelmäßigem Abstand zueinander gebildet sind. Dies ermöglicht eine besonders gleichmäßige Schmierung der Führungsaufnahme und der Spannbacken, wodurch höhere Spannkräfte erzielt werden können und Verschleiß reduziert wird. Gleichzeitig weist der Grundkörper nur einen zentralen Schmiernippel an einer leicht zugänglichen Stelle. Dies erleichtert die Wartung des Spannfutters erheblich.

Ganz besonders vorteilhaft ist es, dass jeder Führungsfläche ein radial innenliegendes mit der Zufuhrleitung verbundenes Reservoir zugeordnet ist. Dabei ist es vorgesehen, dass jedes Reservoir mit einer ersten Zufuhrleitung verbunden ist, welches zur Schmieröffnung führt, als auch mit einer zweiten Zufuhrleitung verbunden ist, welche zur Zentralleitung führt. Das Reservoir ist radial innenliegend an dem Durchgang angeordnet. Die Ausbildung von innenliegenden Reservoirs hat den Vorteil, dass bei Drehung des Spannfutters, aufgrund der Zentrifugalkraft die Schmierflüssigkeit radial nach außen gedrückt wird, sprich die Schmierflüssigkeit von dem innenliegenden Reservoir automatisch über die Zufuhrleitungen zu den Schmieröffnungen gelangt. Diese automatische Schmierung der Führungsaufnahme und Spannbacken erhöht somit die Spannkraft und verringert den Verschleiß. Besonders bevorzugt ist es, wenn die Reservoirs auffüllbar sind. Dazu ist an der Außenwandung eine Zugangsöffnung angebracht, die mit der Zentralleitung verbunden ist. Alternativ ist es denkbar, beim ersten Leitungssystem jeder Führungsfläche separat eine Zufuhrleitung zuzuordnen, die ein in Richtung der Führungsaufnahme geöffnete Schmieröffnung aufweist sowie mit dem Reservoir verbunden ist. Die Zufuhrleitung weist eine Zugangsöffnung an der Außenwandung auf. Eine in Umfangsrichtung verlaufende Zentralleitung ist nicht vorgesehen.

Im Rahmen der Erfindung ist es weiterhin bevorzugt, dass jede Führungsaufnahme tangential eine durch die Innenwandung begrenzte Keilstangenaufnahme mit einer Keilstange zugeordnet ist, die entlang zweier gegenüberliegender Keilstangenführungsflächen bewegbar ist, dass jeder Keilstangenaufnahme eine mit der Zentralleitung verbundene Keilstangenschmierleitung zugeordnet ist, die mindestens eine in Richtung der Keilstangenaufnahmen geöffnete Keilstangenschmieröffnung aufweist. Dabei stehen die Keilstangen mit den Spannbacken in Kontakt, wodurch eine einfache und effektive Art der Verstellung der Spannbacken erreicht wird. Dabei kann das Spannfutter als Zweibackensystem oder Dreibackensystem gebildet sein. Die Keilstangenschmierleitung und die Keilstangenschmieröffnung ermöglichen eine kontinuierliche Schmierung der Keilstangen, die zu einer höheren Spannkraft und geringerem Verschleiß führt. Weiterhin hat es sich als günstig erwiesen, dass die Keilstangenschmierleitung verzweigt ist in einer Mehrzahl von Keilstangenschmieröffnungen und dass die Keilstangenschmierleitung parallel zu den sich gegenüberliegenden Keilstangenführungsflächen in der Keilstangenaufnahme geführt ist. In einer alternativen Ausführungsform ist es ebenfalls möglich, eine separate Keilstangenschmierleitung auszubilden, die nicht mit der Zentralleitung verbunden ist.

Vorteilhaft ist es auch, wenn der Futterkörper ein zweites Leitungssystem zur Reinigung umfasst, mit einem in Umfangsrichtung verlaufenden Zentralkanal, dass jeder Führungsfläche jeweils ein mit dem Zentralkanal verbundener Zufuhrkanal zugeordnet ist, der eine sich in Richtung Führungsaufnahme öffnende Reinigungsöffnung aufweist. Durch das zweite Leitungssystem wird eine Reinigung der Führungsflächen und Führungsaufnahme ermöglicht. Besonders vorteilhaft ist es in diesem Zusammenhang, wenn die Reinigung mittels Druckluft erfolgt und dass der Radius des Zentralkanals und des Zufuhrkanals geringer ist als der Radius der Zentralleitung und der Zufuhrleitung. Dadurch kann die Reinigung bei höherem Druck erfolgen. Vorgesehen ist ebenfalls, dass an der Außenwandung eine Reinigungskanalöffnung angebracht ist, die mit dem Zentralkanal verbunden ist. Dies ermöglicht einen besonders leichten Zugang zum zweiten Leitungssystem. In einer alternativen Ausführungsform ist es ebenso vorgesehen, dass mehr als zwei Leitungssysteme ausgebildet sind. Gleichzeitig können die mindestens zwei Leitungssysteme durch das generative Fertigungsverfahren des Grundkörpers beliebig im Spannfutter geführt werden bzw. ausgebildet werden. Besonders bevorzugt ist es, wenn der Zentralkanal in Umfangsrichtung entlang der Außenwandung verläuft. Die Zentralleitung und der Zentralkanal sind an der Außenwandung des Grundkörpers schichtweise übereinander angeordnet. Mit anderen Worten kann der Grundkörper bzw. das Spannfutter auch ein erstes Leitungssystem (Schmierleitungssystem) und/oder ein zweites Leitungssystem (Reinigungsleitungssystem) umfassen.

Im Rahmen der Erfindung besonders vorteilhaft ist es, dass der Zufuhrkanal verzweigt ist in eine Mehrzahl von Reinigungsöffnungen. Dies ermöglicht eine besonders effektive Reinigung der Führungsflächen und eine besonders einfache Wartung der Spannvorrichtung.

In einer zweiten Ausführungsform ist die Spannvorrichtung als Greifer gebildet, wobei der Grundkörper quaderförmig gebildet ist mit im Grundkörper ausgebildeten, durch eine Innenwandung begrenzten Zylinderräumen und das zwischen der Außenwandung und der Innenwandung der mindestens eine Hohlraum angeordnet ist. Durch die Ausbildung mindestens eines Hohlraums kommt es auch beim Greifer zu einer Gewichtsreduktion, wobei der Greifer, aufgrund der Ausbildung des Mittels zur Verstärkung in den Hohlräumen, weiterhin eine hohe Belastbarkeit und Stabilität aufweist. Gleichzeitig werden die im Grundkörper übertragenen Vibrationen bei Verwendung des Greifers gedämpft, wodurch auch besonders gegenüber mechanischen Belastungen empfindliche Stücke mit dem Greifer ergriffen werden können. Insbesondere ist es vorgesehen, dass zwischen der Innenwandung und der Außenwandung mehrere Hohlräume ausgebildet sind, die mit dem Mittel zur Verstärkung durch Kompartimentierung gefüllt sind und die voneinander durch Innenwandungen getrennt sind. Weiterhin ist es vorgesehen, dass nicht jeder Hohlraum das Mittel zur Verstärkung (den Metallschaum oder die Struktur) aufweisen muss. Besonders bevorzugt ist es allerdings, dass in jedem Hohlraum das Mittel zur Verstärkung ausgebildet ist. Weiterhin ist es günstig, wenn überall dort zwischen Innenwandung und Außenwandung Hohlräume im Grundkörper des Greifers ausgebildet sind, wo die Flächen bzw. Volumina nur geringen Belastungen, d.h. geringen Kräften ausgesetzt sind. Im Rahmen der Erfindung ist es weiterhin vorgesehen, dass die Zylinderräume durch eine Kolbenstangenöffnung mit einer Kolbenstange und durch eine Kolbenöffnung mit einem mit der Kolbenstange verbundenen Kolben gebildet sind. Dabei hat es sich insbesondere als günstig erwiesen, wenn die Kolbenöffnung und die Kolbenstangenöffnung unterschiedliche Radien aufweisen.

Darüber hinaus ist es bevorzugt, wenn an einer Frontseite und an einer Hinterseite des Grundkörpers jeweils eine Abdeckplatte angebracht ist. Diese dient dem Schutz des Mittels zur Versteifung, d.h. den mit Metallschaum oder durch die Struktur gefüllten Hohlräumen.

Im Rahmen der zweiten Ausführungsform ist es weiterhin bevorzugt, dass im Grundkörper zwei parallel verlaufende Führungsaufnahmen mit jeweils einer inneren und einer äußeren Führungsfläche ausgebildet sind, dass jeder Führungsaufnahme mindestens ein Schmierleitungssystem zugeordnet ist, mit einer eine Zugangsöffnung an der Oberfläche des Grundkörpers aufweisenden Zentralleitung, die mit einer inneren Schmierleitung und mit einer äußeren Schmierleitung verbunden ist, wobei die innere Schmierleitung eine zur inneren Führungsfläche geöffnete innere Schmieröffnung und die äußere Schmierleitung eine zur äußeren Führungsfläche geöffnete äußere Schmieröffnung aufweist. Die Führung und die Ausbildung des Schmierleitungssystems können auf vielerlei Art erfolgen. So ist es auch vorstellbar, dass die innere und die äußere Führungsfläche jeweils eine separate Zugangsöffnung, eine separate Zentralleitung und eine separate Schmierleitung aufweisen, wobei der Schmierleitung mindestens eine zur Führungsfläche geöffnete Schmieröffnung zugeordnet ist. In einer alternativen Ausführungsform ist es ebenfalls möglich, die verschiedenen Schmierleitungen miteinander zu verbinden.

Besonders bevorzugt ist es bei der zweiten Ausführungsform, dass die innere Schmierleitung verzweigt ist in eine Mehrzahl von inneren Schmieröffnungen und dass die äußere Schmierleitung verzweigt ist in eine Mehrzahl von äußeren Schmieröffnungen. Gleichzeitig hat es sich als günstig erwiesen, wenn die innere Schmierleitung parallel zur inneren Führungsfläche verläuft und die äußere Schmierleitung parallel zur äußeren Führungsfläche geführt ist. Dies ermöglicht eine optimale kontinuierliche Schmierung der Führungsflächen, wodurch die Spannkraft des Greifers erhöht wird, die Wartung vereinfacht wird, und der Verschleiß reduziert ist. Weiterhin ist es günstig, dass auch im Grundkörper der zweiten Ausführungsform ein Reinigungssystem analog zu dem der ersten Ausführungsform ausgebildet ist.

Die dritte Ausführungsform umfasst eine Spannvorrichtung, die als Schraubstock gebildet ist, wobei der Grundkörper eine Spindelaufnahme zur Verstellung von Backen aufweist und zwischen der Spindelaufnahme und der Außenwandung an einer Unterseite des Grundkörpers mindestens ein parallel zur Spindelaufnahme verlaufender Hohlraum ausgebildet ist. Alternativ ist es auch möglich, dass der Grundkörper mehrere durch Innenwandungen voneinander getrennte Hohlräume aufweist, wobei mindestens einer der Hohlräume mit dem Mittel zur Versteifung durch Kompartimentierung (Metallschaum oder Struktur) gefüllt ist. Besonders bevorzugt ist es allerdings, alle im Grundkörper ausgebildeten Hohlräume mit dem Mittel zur Versteifung zu füllen. Durch die Ausbildung des Hohlraums kommt es auch bei dem Schraubstock zu einer erheblichen Gewichtsreduktion. Dabei ermöglicht die Bildung des Mittels zur Versteifung im Hohlraum eine hohe Belastbarkeit und Stabilität des Schraubstocks. Gleichzeitig werden Vibrationen, die beim Einsatz des Schraubstocks entstehen, gedämpft und dadurch nur in geringem Maße auf das Werkstück übertragen. Auch Vibrationen in Form von Geräuschen werden hierdurch gedämpft, wodurch es beim Einsatz der Spannvorrichtung bzw. des Schraubstocks zu einer geringeren Lärmbelastung kommt. Um das Mittel zur Versteifung von der Umgebung zu schützen und um die Lebensdauer des Schraubstocks zu verlängern, ist an einer Frontseite des Grundkörpers eine Abdeckplatte angeordnet.

Im Rahmen der dritten Ausführungsform ist es vorgesehen, dass in der Spindelaufnahme eine Führungsaufnahme angeordnet ist, der zwei gegenüberliegende Führungsflächen zugeordnet sind, dass jeder Führungsfläche ein Schmierleitungssystem mit einer eine Zugangsöffnung an der Oberfläche des Grundkörpers aufweisenden Zentralleitungen zugeordnet ist, die mit einer Schmierleitung verbunden ist, wobei die Schmierleitung eine zur Führungsaufnahme geöffnete Schmieröffnung umfasst. Dadurch wird auch beim Schraubstock eine kontinuierliche Schmierung der Führungsflächen erreicht, die zu einer höheren Spannkraft bei geringer Wartungsintensität und geringem Verschleiß, d.h. langer Lebensdauer führt. In diesem Zusammenhang ist es besonders bevorzugt, dass die Schmierleitung verzweigt ist in einer Mehrzahl von Schmieröffnungen, und dass die Schmierleitung parallel zur Führungsfläche geführt ist. Weiterhin ist es günstig, dass auch im Grundkörper der dritten Ausführungsform ein Reinigungsleitungssystem analog zu dem des ersten Ausführungsbeispiels ausgebildet ist.

Zusammenfassend besteht der Vorteil der erfindungsgemäßen Spannvorrichtung darin, durch die im Grundkörper ausgebildeten Hohlräume eine erhebliche Gewichtsreduktion herbeizuführen, die speziell bei Spannfuttern zu einer Erhöhung der Leistungsfähigkeit führt, da das Trägheitsmoment aufgrund der geringeren Masse reduziert wird, wodurch höhere Drehzahlen erreicht werden können. Indem der mindestens eine Hohlraum ein Mittel zur Versteifung aufweist, d.h. einen Metallschaum oder eine Struktur, wird trotz der Hohlräume eine hohe Stabilität bei geringem Gewicht erreicht. Die Spannvorrichtung weist somit eine hohe Belastbarkeit, d.h. eine hohe Lebensdauer auf. Gleichzeitig werden auf den Grundkörper übertragene Vibrationen gedämpft und in nur geringem Maße an das Werkstück weitergegeben. Dadurch können auch Werkstücke, die nur auf geringe mechanische Belastungen ausgelegt sind, bearbeitet und ergriffen werden. Indem der Grundkörper durch ein generatives Fertigungsverfahren gebildet ist, ist es möglich, beliebig verlaufende Leitungssysteme in die Spannvorrichtung zu integrieren, die eine kontinuierliche Schmierung der Führungsflächen und eine damit verbundene höhere Spannkraft erzielen. Die Verschleißerscheinungen der Spannvorrichtung werden dadurch minimiert und die Lebensdauer erhöht. Gleichzeitig führt die zusätzliche Ausbildung eines zweiten Reinigungsleitungssystems zu einer Vereinfachung der Wartungsarbeiten an der Spannvorrichtung.

Im Folgenden wird die Erfindung an drei in der Zeichnung dargestellten Ausführungsbeispielen näher erläutert; es zeigen:
- Fig. 1: eine perspektivische Ansicht der ersten Ausführungsform der erfindungsgemäßen Spannvorrichtung
- Fig. 2: eine Draufsicht der ersten Ausführungsform
- Fig. 3: eine Seitenansicht und einen Schnitt A-A der ersten Ausführungsform
- Fig. 4: eine Seitenansicht und einen Schnitt B-B der ersten Ausführungsform
- Fig. 5: einen Schnitt C-C der ersten Ausführungsform
- Fig. 6: einen Schnitt D-D der ersten Ausführungsform
- Fig. 7: eine perspektivische Ansicht der zweiten Ausführungsform der erfindungsgemäßen Spannvorrichtung
- Fig. 8: eine Frontansicht der zweiten Ausführungsform
- Fig. 9: ein Schnitt E-E der zweiten Ausführungsform
- Fig. 10: ein Schnitt F-F der zweiten Ausführungsform
- Fig. 11: eine Draufsicht der zweiten Ausführungsform
- Fig. 12: einen Schnitt G-G der zweiten Ausführungsform
- Fig. 13: ein Schnitt H-H der zweiten Ausführungsform
- Fig. 14: einen Schnitt I-I der zweiten Ausführungsform
- Fig. 15: eine perspektivische Ansicht der dritten Ausführungsform der erfindungsgemäßen Spannvorrichtung
- Fig. 16: eine Frontansicht der dritten Ausführungsform

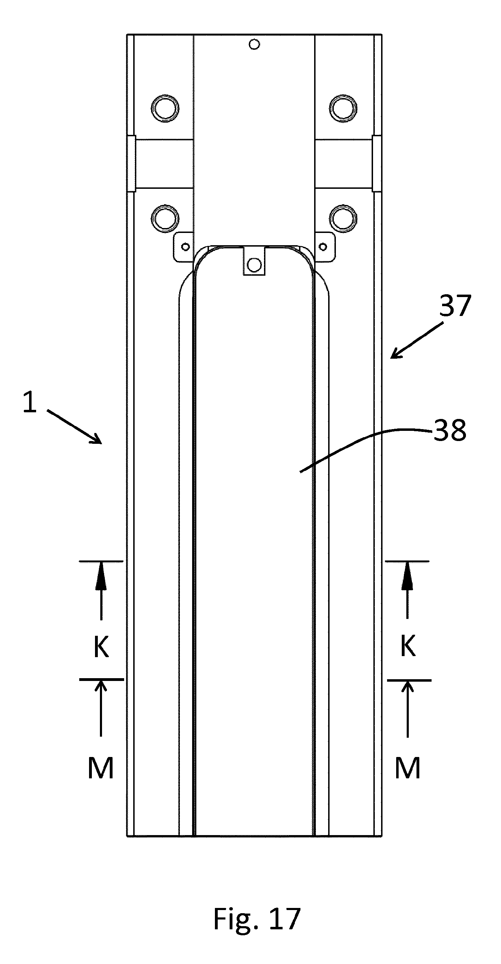

- Fig. 17: eine Draufsicht auf die dritte Ausführungsform
- Fig. 18: einen Schnitt K-K der dritten Ausführungsform
- Fig. 19: einen Schnitt L-L der dritten Ausführungsform

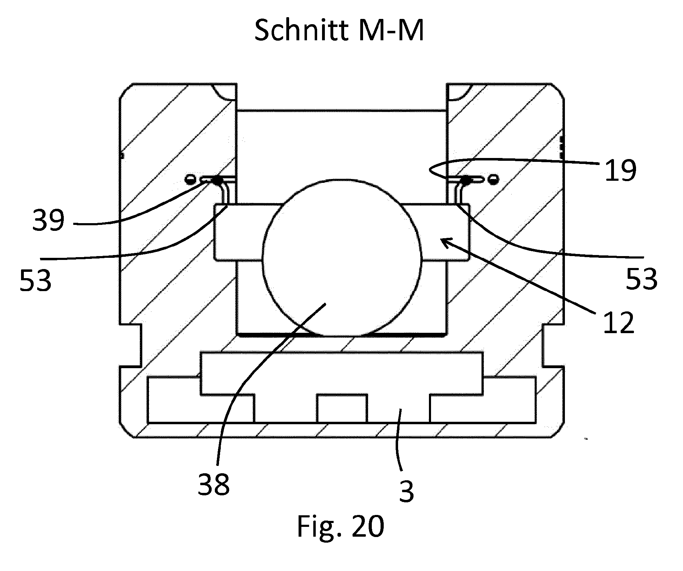

- Fig. 20: einen Schnitt M-M der dritten Ausführungsform.

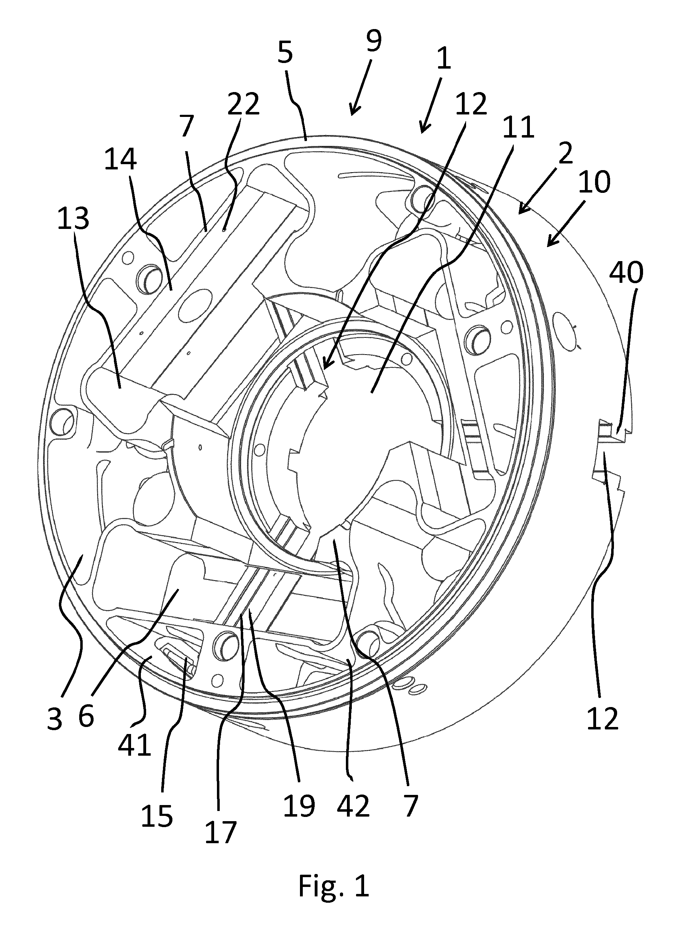

Fig. 1 zeigt die perspektivische Ansicht der ersten Ausführungsform der erfindungsgemäßen Spannvorrichtung 1, die als Spannfutter 9 gebildet ist. Das Spannfutter 9 umfasst einen Futterkörper 10 als Grundkörper 2, der von einer Außenwandung 5 umgeben ist, sowie in der Mitte einen Durchgang 11 aufweist. Dem Futterkörper 10 ist darüber hinaus eine Bodenplatte 6 zugeordnet. Von dem Durchgang 11 aus führen drei Führungsaufnahmen 12 zur Außenwandung 5, wobei die Führungsaufnahmen 12 in regelmäßigem Abstand um den Umfang des Durchgangs 11 verteilt angeordnet sind. Die Führungsaufnahmen 12 umfassen jeweils zwei Führungsschienen 40 und zwei gegenüberliegende Führungsflächen 17, entlang derer Spannbacken bewegt werden können. Der Durchgang 11 wird durch eine Innenwandung 7 umschlossen. Darüber hinaus ist das Innere des Futterkörpers 10 durch die Ausbildung einer Innenwandung in mehrere Grundstrukturen unterteilt (Hohlräume 3, Keilstangenaufnahmen 13, Führungsaufnahmen 12, Durchgang 11 und Leitungssysteme 15, 23): tangential zu den Führungsaufnahmen 12 sind in regelmäßigem Abstand um den Umfang des Durchgangs 11 verteilt Keilstangenaufnahmen 13 angeordnet. Die Keilstangenaufnahmen 13 sind durch eine Innenwandung begrenzt und weisen zwei gegenüberliegende Keilstangenführungsflächen 14 auf, entlang derer die Keilstangen entlang gleiten können. Die Innenwandung 7 zwischen dem Durchgang 11 und der Keilstangenaufnahme 13 weist eine Öffnung auf. Diese erleichtert das Einsetzen der Keilstangen. Die Keilstangen stehen mit den Spannbacken in Kontakt, so dass eine Bewegung der Keilstangen entlang der Keilstangenführungsflächen 14 zu einer Bewegung der Spannbacken führt, wobei die Spannbacken radial nach innen oder außen gleiten.

In dem Volumen zwischen der Innenwandung 7 und der Außenwandung 5 sind im Grundkörper 2 mehrere Hohlräume 3 ausgebildet: Diese sind mit einem in den Figuren nicht dargestellten Mittel zur Versteifung, vorzugsweise mit einem Metallschaum (Aluminiumschaum) oder einer Struktur gefüllt. Die Anordnung der Hohlräume 3 im Futterkörper 10 sowie deren Form ist so gewählt, dass es zu einer maximalen Gewichtsreduktion bei maximaler Belastbarkeit des Spannfutters kommt. So ist jeweils zwischen der die Keilstangenaufnahme 13 begrenzenden Innenwandung 7 und der Außenwandung 5 ein kleiner Hohlraum 41 und ein vom kleinen Hohlraum 41 durch die Innenwandung 7 getrennter größerer Hohlraum 42 angeordnet. Der größere Hohlraum 42 erstreckt sich bis zur nächsten Keilstangenaufnahme 13. Die Anordnung der Hohlräume 3 im Futterkörper erfolgt rotationssymmetisch. Der Futterkörper 10 weist darüber hinaus ein erstes Leitungssystem 15 zur Schmierung der Führungsaufnahmen 12 und ein zweites Leitungssystem 23 zur Reinigung der Führungsaufnahmen 12 auf. Das erste Leitungssystem 15 und das zweite Leitungssystem 23 verlaufen teilweise in der Außenwandung 5, in der Innenwandung 7 und in den Hohlräumen 3.

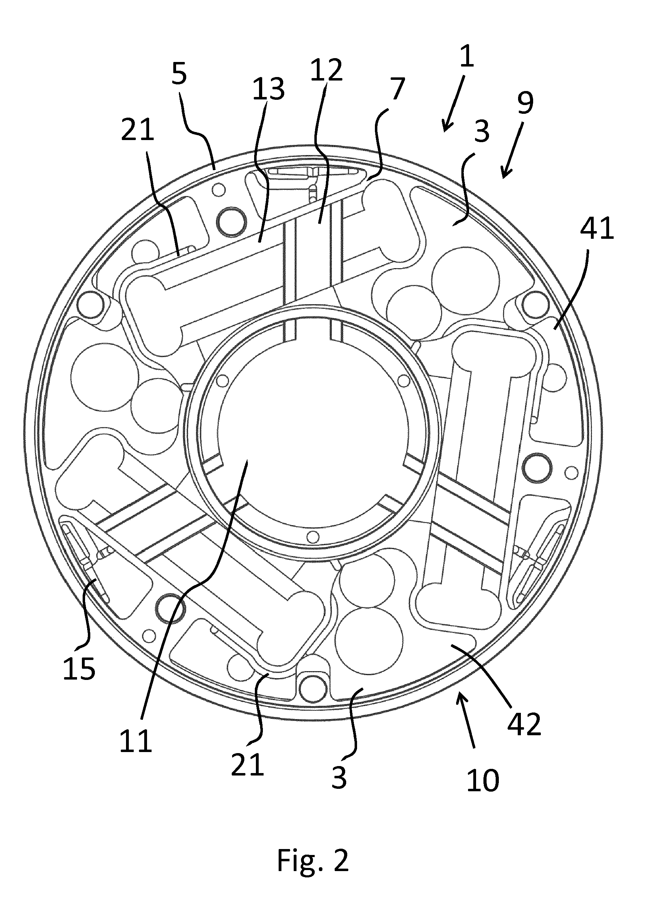

Fig. 2 zeigt die Draufsicht der ersten Ausführungsform der erfindungsgemäßen Spannvorrichtung 1, wobei hier nochmals verdeutlicht wird, dass die Leitungen des ersten Leitungssystems 15, d.h. die Zufuhrleitungen 18 teilweise in den Hohlräumen 3 verlaufen und dass durch die Innenwandung 7 das Volumen des Futterkörpers 10 in verschiedene Grundstrukturen aufgeteilt wird.

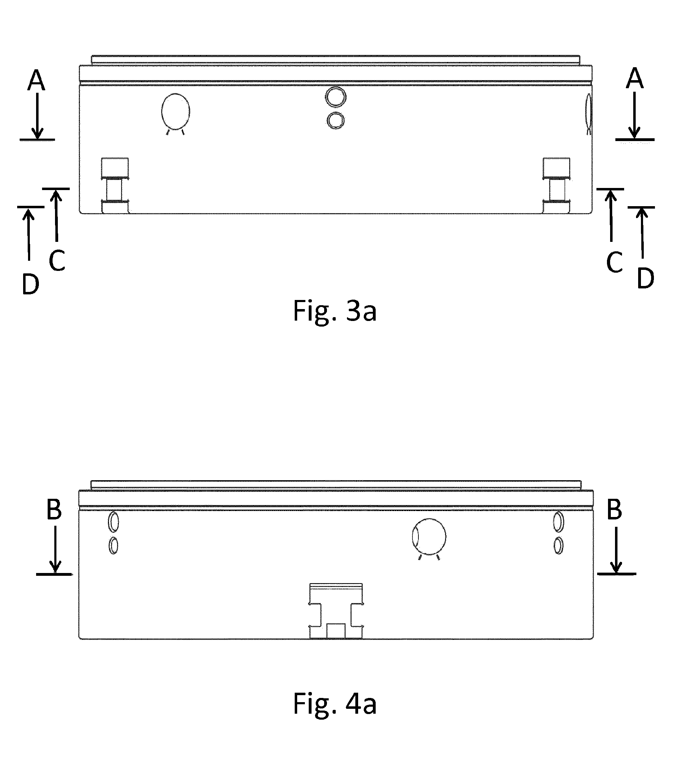

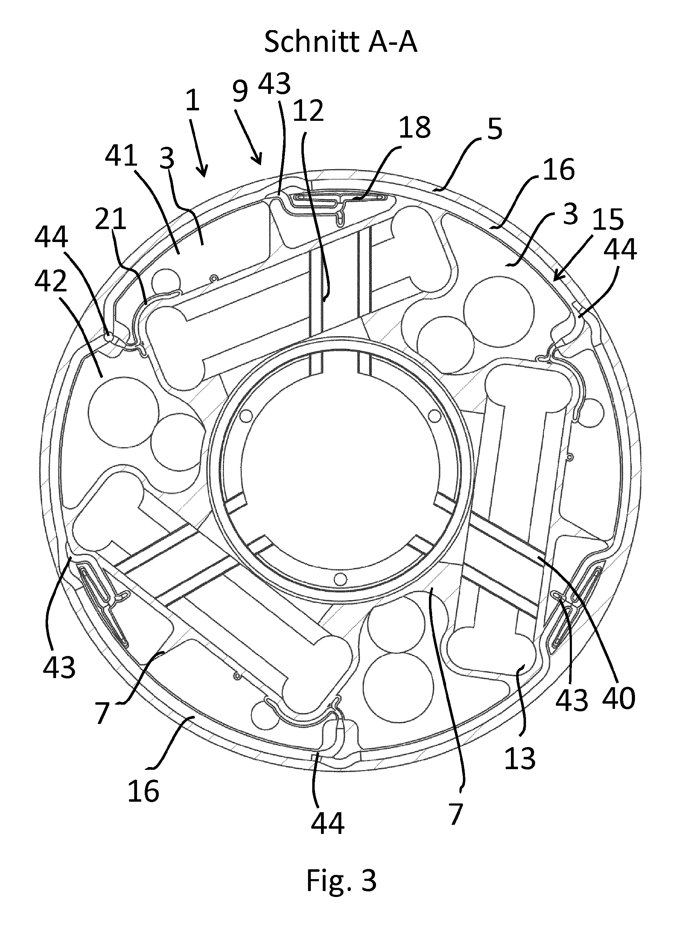

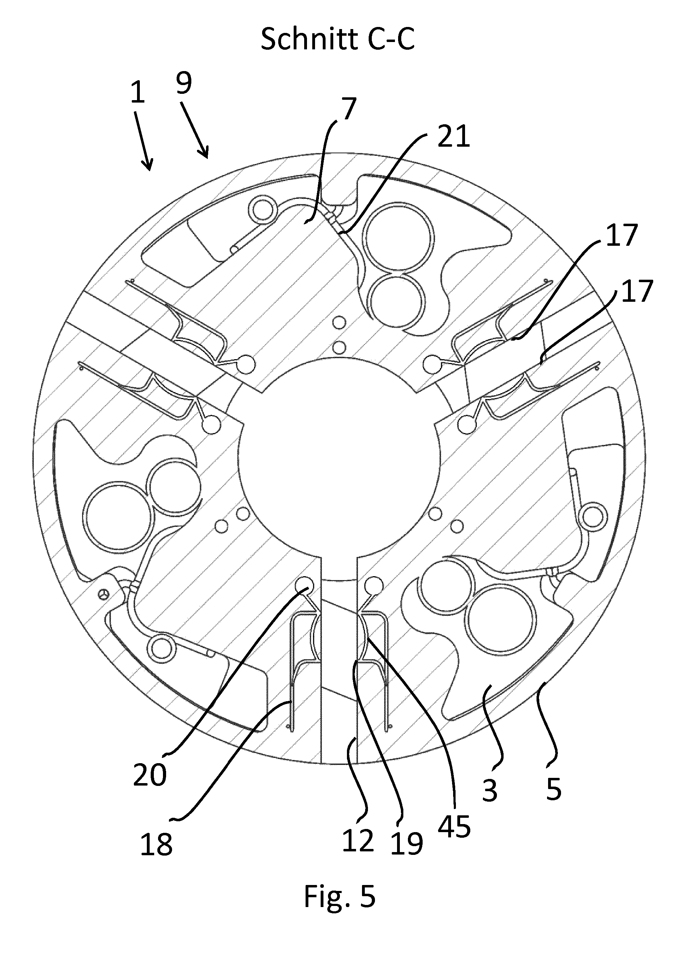

Die Ausbildung des ersten Leitungssystems 15, d.h. des Schmierleitungssystems, wird in den Fig. 3 und Fig. 5 gezeigt. Das erste Leitungssystem 15 besteht dabei aus einer in Umfangsrichtung entlang der Außenwandung 5 verlaufenden Zentralleitung 16. Diese weist drei regelmäßig über den Umfang verteilte Abzweigungen 43 auf, von wo aus die Zufuhrleitungen 18 zu den Führungsschienen bzw. Führungsflächen 17 der Führungsaufnahmen 12 führen. Die Abzweigung 43 von der Zentralleitung 16 zu der Zufuhrleitung 18 erfolgt in dem kleinen Hohlraum 41. Die Zufuhrleitung 18 wird aufgeteilt, sodass jeder Führungsschiene 40 der Führungsaufnahme 12 eine Zufuhrleitung zugeordnet wird. Die Zufuhrleitungen 18 verzweigen sich dabei, so dass jeder Führungsfläche 17 der Führungsaufnahme 12 zwei Schmieröffnungen 19 zugeordnet sind. Die verzweigten Zufuhrleitungen 18 sind wiederum über eine Verbindungsleitung 45 miteinander und mit einem radial innenliegenden Reservoir 20 verbunden sind. Jeder Führungsfläche 17 ist dabei ein radial innenliegendes in der Nähe des Durchgangs 11 angeordnetes Reservoir 20 zugeordnet. Dies hat den Vorteil, dass bei einem drehenden Spannfutter 9 aufgrund der Zentrifugalkraft das im Reservoir 20 enthaltene Schmiermittel nach außen in die Verbindungsleitung 45 gedrückt wird, wodurch eine kontinuierliche Schmierung der Führungsflächen 17 erreicht wird.

Darüber hinaus weist die Zentralleitung 16 drei rotationssymmetrisch angeordnete, gleichmäßig über den Umfang verteilte Verbindungen 44 zu den Keilstangenschmierleitungen 21 auf, die dafür sorgen, dass die Schmierflüssigkeit von der Zentralleitung 16 zu den Keilstangenschmieröffnungen 22 an den Keilstangenführungsflächen 14 der Keilstangenaufnahme 13 geleitet wird. An der Verbindung 44 zwischen Zentralleitung 16 und Keilstangenschmierleitung 21 ist die Außenwandung 5 leicht nach vorne gestülpt. Von der Verbindung 44 führt die Keilstangenschmierleitung 21 durch den kleinen 41 bzw. größeren Hohlraum 42 durch die Innenwandung 7 zur Keilstangenaufnahme 13. Durch die Keilstangenschmierleitung 21 wird eine kontinuierliche Schmierung der Keilstangenführungsflächen 14 erreicht. Die Reservoirs 20, Zufuhrleitungen 18, Keilstangenschmierleitungen 21 und die Zentralleitung 16 können durch eine nicht dargestellte, sich an der Außenwandung 5 befindende Schmierleitungsöffnung mit Schmierflüssigkeit befüllt werden.

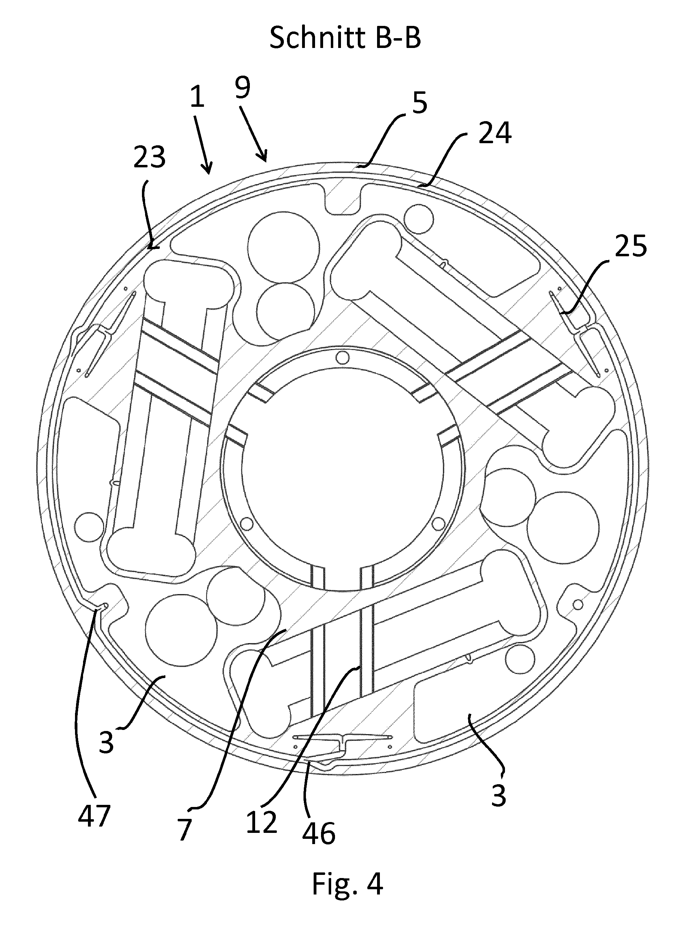

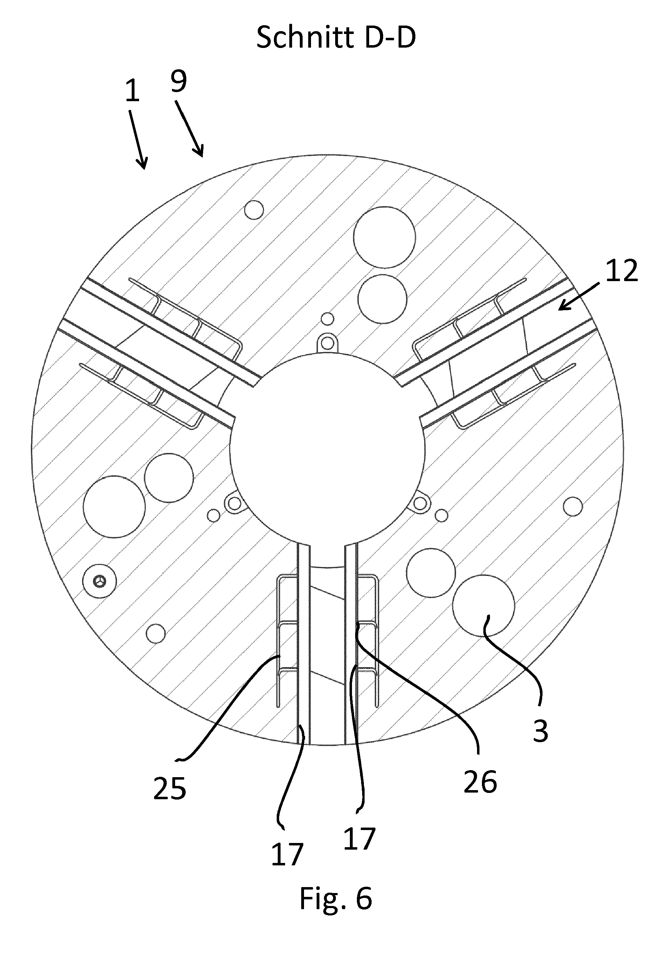

In Fig. 4 und 6 wird der Aufbau des zweiten Leitungssystems 23, des Reinigungsleitungssystems, dargestellt. Dabei zeigt Fig. 4, dass das zweite Leitungssystem 23 analog zum ersten Leitungssystem 15 einen in Umfangsrichtung in der Außenwandung 5 verlaufenden Zentralkanal 24 aufweist, der ebenfalls über drei regelmäßig über den Umfang verteilte Reinigungsabzweigungen 46 und eine zentrale Druckluftzufuhr 47 verfügt. Das erste Leitungssystem 15 und das zweite Leitungssystem 23 sind untereinander in verschiedenen Ebenen im Futterkörper 10 schichtweise angeordnet. Die Reinigungsabzweigung 46 ist tangential zur Führungsaufnahme 12, in der die Keilstangenaufnahme 13 umgebenden Innenwandung 7 angeordnet. Von dort aus teilt sich der Kanal so auf, dass jeder der Führungsschienen 40 der Führungsaufnahmen 12 bzw. jeder Führungsfläche 17 ein Zufuhrkanal 25 zugeordnet ist, der sich in drei Reinigungsöffnungen 26 aufteilt. Die Reinigungsöffnungen 26 orientieren sich tangential zum Spannfutter 9 bzw. senkrecht zur Führungsfläche 17. Die Druckluftzufuhr 47 ist analog zur Verbindung 44 des ersten Leitungssystems 15 in den Ausstülpungen der Außenwandung 5 angeordnet. Von dort führen in der Zeichnung nicht gezeigte Kanäle zur Druckluftzufuhr 47. Das zweite Leitungssystem 23 (vorzugsweise für Druckluft) dient der möglichst einfachen Reinigung der Führungsflächen 17 und der Führungsaufnahmen 12, sodass die Wartung des Spannfutters vereinfacht wird.

Fig. 3 ist im Vergleich zu Fig. 4 ebenfalls zu entnehmen, dass sich die 3-dimensionale Form der Hohlräume 3 in den verschiedenen Schnittebenen des Spannfutters 9 verändern. So ist an der Stelle in Fig. 4, an der sich die Reinigungsabzweigung 46 befindet, eine Innenwandung 7 ausgebildet, während an derselben Stelle in Fig. 3 bereits ein Hohlraum 3 ausgebildet ist.

Das Spannfutter 9 wird mittels eines generativen Fertigungsverfahrens, bevorzugt durch Laserstrahlschmelzen hergestellt. Dabei wird ein 3D-Modell des Spannfutters 9 erstellt, welches bereits alle relevanten Grundstrukturen, d.h. die Führungsaufnahmen 12, der Durchgang 11, die Außenwandung 5, die Bodenplatte 6, die Innenwandung 7, die Keilstangenaufnahmen 13, das erste Leitungssystem 15, das zweite Leitungssystem 23 und deren Form sowie Anordnung im Futterkörper umfasst. Das generative Fertigungsverfahren ermöglicht es dabei, speziell die Leitungssysteme 15, 23 und die Hohlräume 3 individuell im Spannfutter 9 anzuordnen, sowie den Aufbau des Spannfutters 9 an individuelle Anforderungen anzupassen. Das Spannfutter 9 wird sodann anhand des 3D-Modells aus Werkzeugstahl oder Titan mittels Laserstrahlschmelzen schichtweise erstellt. In einem nächsten Schritt werden die zwischen der Innenwandung 7 und der Außenwandung 5 des Spannfutters 9 ausgebildeten Hohlräume 3 mit einem Metallschaum als Mittel zur Versteifung durch Kompartimentierung gefüllt. Dazu werden aus Aluminium und Titanhydrid bestehende Plättchen in die Hohlräume 3 gefüllt, wobei durch Erhitzen des Futterkörpers 10 auf ca. 500° Celsius Aluminiumschaum entsteht. In einem weiteren Schritt kann die Oberfläche des Spannfutters 9 so bearbeitet werden, dass sie eine glatte, ebene Oberfläche bildet. Alternativ zum Metallschaum als Mittel zur Versteifung, kann auch im ersten Schritt in die Hohlräume 3 zwischen Innenwandung 7 und Außenwandung 5 eine Struktur, z.B. eine Wabenstruktur, integriert werden. Dies bedeutet, dass bereits das 3D-Modell eine Struktur in den Hohlräumen 3 enthält und folglich die Struktur bereits im generativen Fertigungsverfahren mit den anderen Grundstrukturen des Spannfutters 9 erstellt werden kann. Das Füllen der Hohlräume 3 durch ein Mittel zur Versteifung birgt den Vorteil, dass die Hohlräume 3 zusätzlich stabilisiert werden, d.h. die Belastbarkeit erhöht wird. Gleichzeitig ist das Gewicht des erfindungsgemäßen Spannfutters 9 aufgrund der Poren des Metallschaums bzw. der Struktur in den Hohlräumen 3 signifikant geringer.

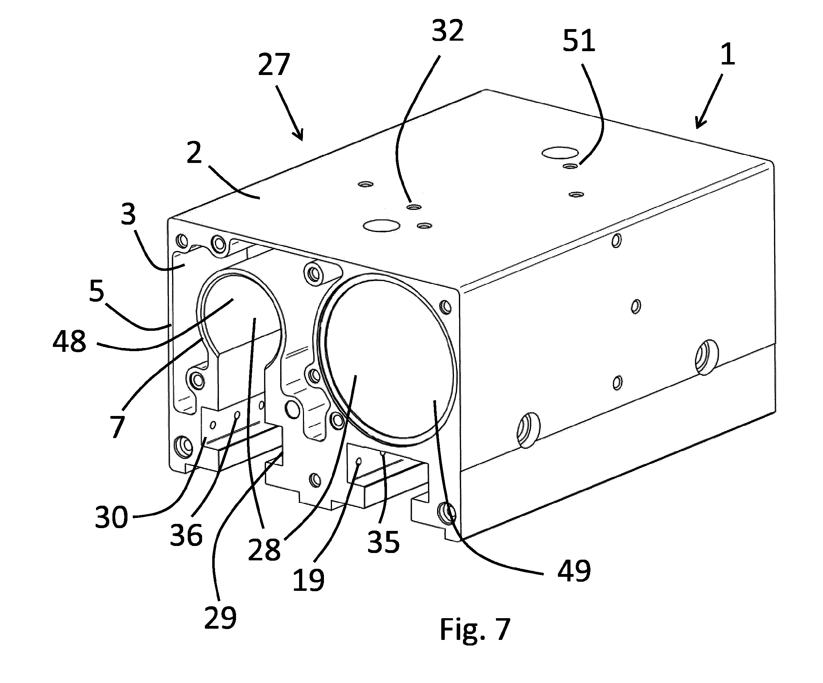

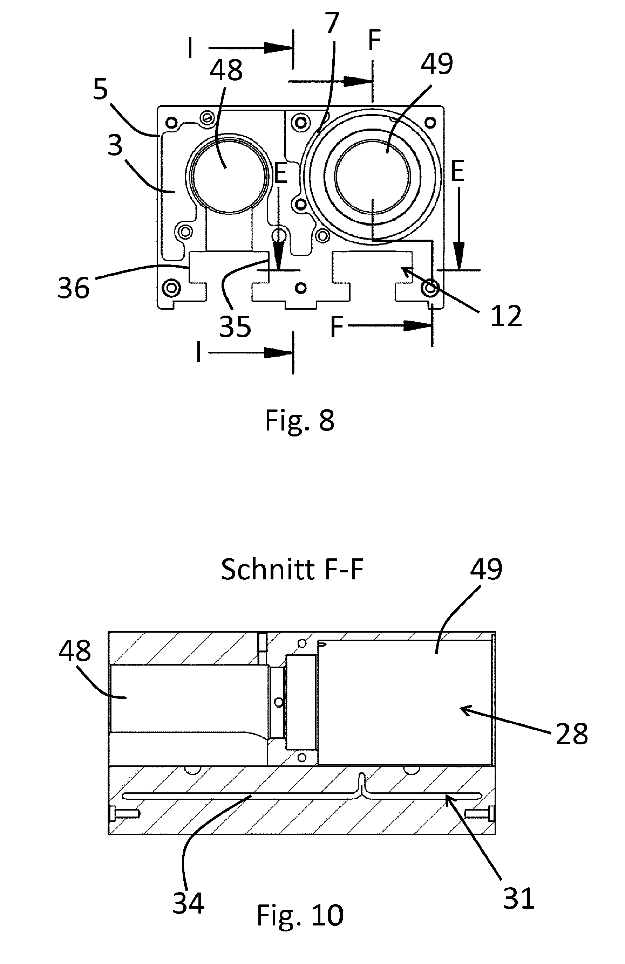

Fig. 7 zeigt die perspektivische Ansicht einer zweiten Ausführungsform der erfindungsgemäßen Spannvorrichtung 1, welche durch einen Greifer 27 gebildet ist. Der Greifer 27 umfasst dabei einen quaderförmigen Grundkörper 2, welcher eine Außenwandung 5 aufweist, zwei parallel verlaufende Führungsaufnahmen 12 und zwei parallel zu den Führungsaufnahmen 12 verlaufende Zylinderräume 28. Die Führungsaufnahmen 12 weisen jeweils eine innere 29 und eine äußere Führungsfläche 30 auf. Jeder Zylinderraum 28 ist gebildet aus einer Kolbenstangenöffnung 48 mit einer Kolbenstange und aus einer Kolbenöffnung 49 mit einem mit der Kolbenstange verbundenen Kolben. Fig. 7 ist zu entnehmen, dass von der Frontseite des Grundkörpers 2 betrachtet der Verlauf des Zylinderraums 28 zuerst die Kolbenstangenöffnung 48 und dann die Kolbenöffnung 49 aufweist, während der zweite Verlauf des Zylinderraums 28 zuerst die Kolbenöffnung 49 und dann die Kolbenstangenöffnung 48 aufweist. Der Radius der Kolbenstangenöffnung 48 ist geringer als der Radius der Kolbenöffnung 49. Jeder Führungsaufnahme 12 ist eine nicht gezeigte Greifbacke zugeordnet, wobei die Greifbacken durch die Kolben verschiebbar sind. Fig. 7 zeigt ebenfalls, dass an der Frontseite die Kolbenstangenöffnung 48 durch eine Innenwandung 7 begrenzt ist, wobei zwischen der Außenwandung 5 und Innenwandung 7 ein Hohlraum 3 gebildet ist. An der nicht gezeigten Rückseite des Greifers 27 befindet sich ebenfalls ein Hohlraum 3 zwischen der die Kolbenstangenöffnung 48 begrenzenden Innenwandung 7 und der Außenwandung 5 des Grundkörpers 2. Die Hohlräume 3 verlaufen jeweils im Inneren des Grundkörpers 2 bis zu der Stelle, an der die Kolbenstangenöffnung 48 in eine Kolbenöffnung 49 übergeht. Dies wird speziell in Fig. 10 deutlich. Die Hohlräume 3 weisen ein Mittel zu Versteifung (Metallschau oder Struktur) auf, wodurch einerseits ein geringes Gewicht des Greifers 27 und eine hohe Belastbarkeit erreicht werden.

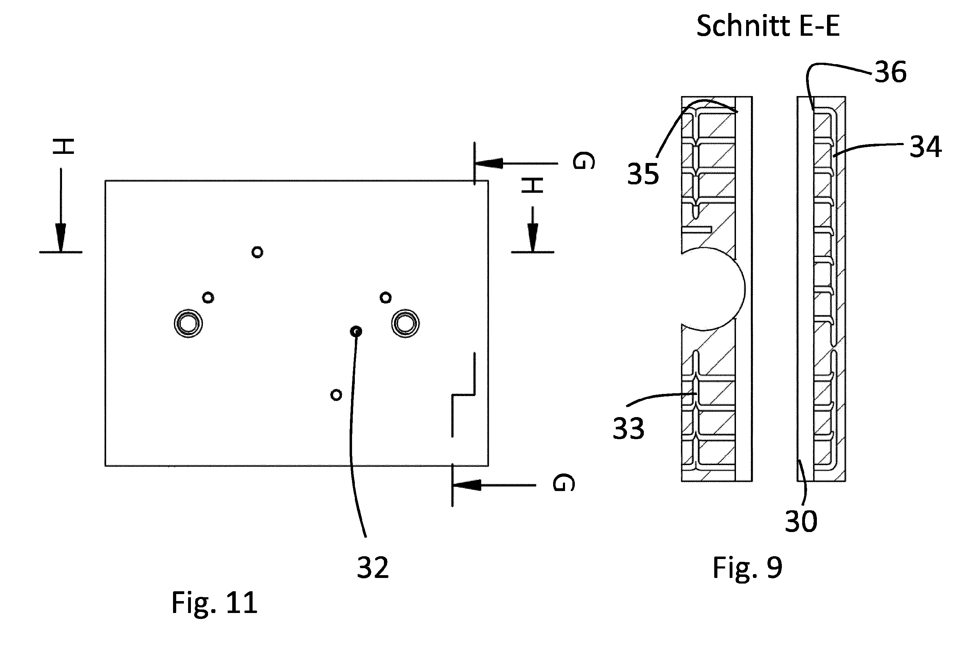

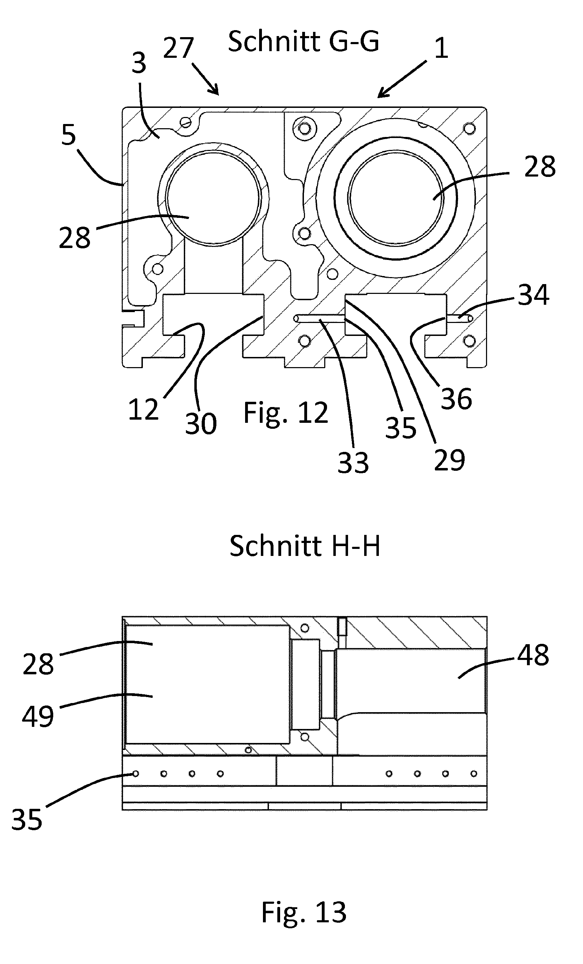

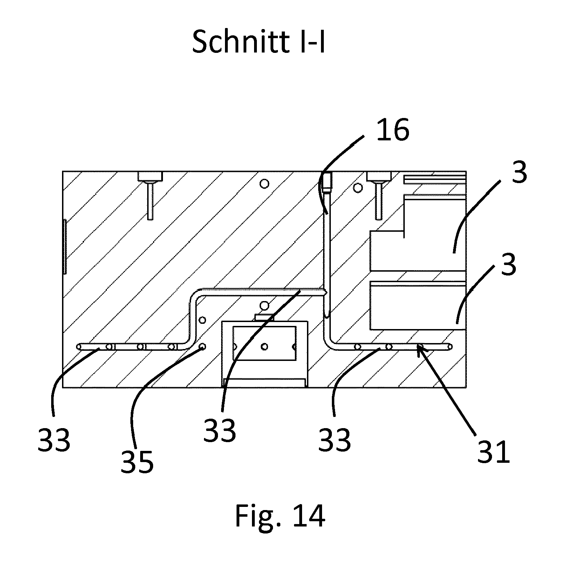

In den Fig. 9 bis 14 wird ein im Grundkörper 2 ausgebildetes Schmierleitungssystem 31 beschrieben. So ist jeder Führungsaufnahme 12 ein Schmierleitungssystem 31 zugeordnet, wobei dieses aus einer Zugangsöffnung 32 an der Oberseite des Grundkörpers 2 besteht, von welcher aus eine Zentralleitung 16 in Richtung der Führungsaufnahmen 12 führen. Die Zentralleitung 16 verzweigt sich zu einer inneren Schmierleitung 33, die parallel entlang der inneren Führungsfläche 29 verläuft und einer äußeren Schmierleitung 34, die parallel zur äußeren Führungsfläche 30 verläuft. Die äußere 34 und die innere Schmierleitung 33 sind mehrfach verzweigt, so dass tangential zur inneren 29 und äußeren Führungsfläche 30 eine Mehrzahl von inneren 35 und äußeren Schmieröffnungen 36 entstehen. Auf diese Art und Weise wird eine kontinuierliche Schmierung der inneren 29 und äußeren Führungsflächen 30 der Führungsaufnahme 12 ermöglicht. Fig. 12 zeigt dabei die Schmieröffnungen 35, 36 entlang der Führungsflächen 29, 30. Die äußeren Schmieröffnungen 36 der äußeren Führungsfläche 30 sind über die äußere Schmierleitung 34 mit der Zentralleitung 16 verbunden. Jede Führungsaufnahme 12 verfügt über ein Schmierleitungssystem 31 mit acht inneren Schmieröffnungen 35 und zwölf äußeren Schmieröffnungen 36.

Auch der Greifer 27 wird mittels eines generativen Fertigungsverfahrens, durch Laserstrahlschmelzen, hergestellt, indem ein 3D-Modell des Grundkörpers 2 erstellt wird. Dieses 3D-Modell umfasst den Aufbau, die Anordnung und die Ausbildung der Zylinderräume 28, Kolbenstangenöffnungen 48, Kolbenöffnungen 49, der Führungsaufnahmen 12, der Schmierleitungssysteme 31, des zweiten Leitungssystems, der Außenwandungen 5, der Innenwandung 7, der Hohlräume 3 sowie der zusätzlichen Leitungssysteme die zum pneumatischen Betrieb der Greifbacken notwendig sind. In einem nächsten Schritt wird anhand des 3D-Modells mittels Laserschmelzen aus Metall schichtweise der Grundkörper 2 erstellt. In einem nächsten Schritt werden in den Hohlräume 3 die Mittel zur Versteifung ausgebildet. Dazu werden aus Aluminium und Titanhydrid bestehende Plättchen in die Hohlräume 3 gefüllt, wobei durch Erhitzen des Grundkörpers 2 auf ca. 500° Celsius Aluminiumschaum entsteht. Die mit Metallschaum gefüllten Hohlräume 3 können nachträglich bearbeitet werden, sodass die Oberflächen geglättet werden. In einem abschließenden Schritt wird zum Schutz eine Abdeckplatte an die Frontseite und die Hinterseite des Grundkörpers 2 angebracht. Alternativ zum Metallschaum kann in die Hohlräume 3 eine Struktur z.B. eine Wabenstruktur ausgebildet sein. Diese Struktur kann direkt ins 3D-Modell integriert werden, sodass bei der Herstellung des Greifers 27 anhand des 3D-Modells die Struktur zur Versteifung, d.h. z.B. die Wabenstruktur gleichzeitig mit dem Rest des Greifers hergestellt wird.

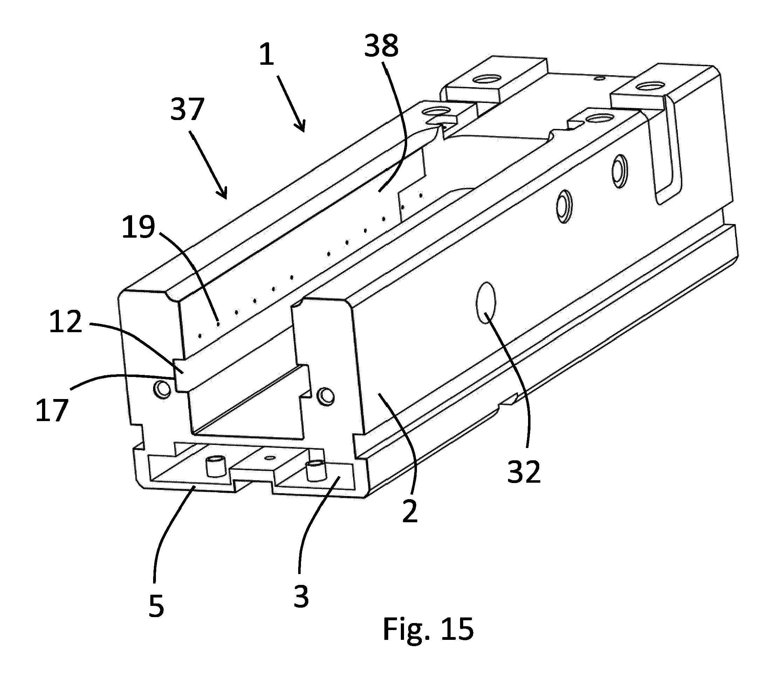

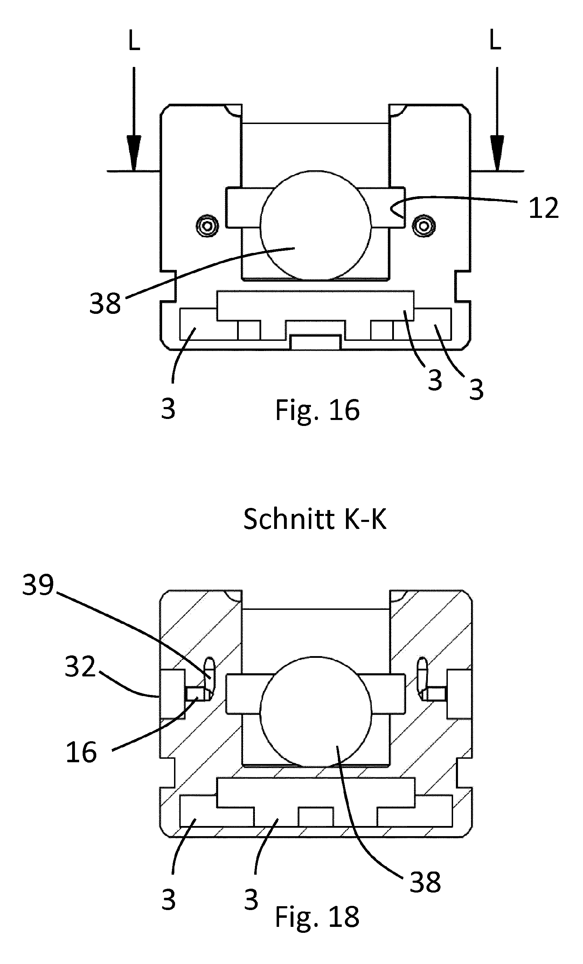

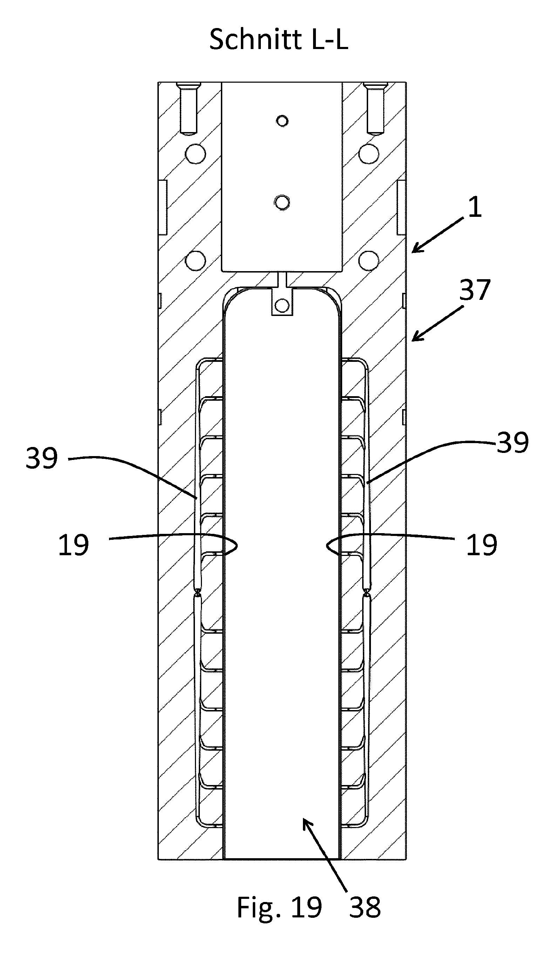

Fig. 15 zeigt die perspektivische Ansicht der dritten Ausführungsform der erfindungsgemäßen Spannvorrichtung 1, die durch einen Schraubstock 37 gebildet ist. Der Schraubstock 37 verfügt über einen Grundkörper 2 mit einer Spindelaufnahme 38, wobei die Spindelaufnahme 38 eine Führungsaufnahme 12 mit zwei Führungsschienen 40 und zwei gegenüberliegenden Führungsflächen 17 umfasst. An der in Fig. 15 nicht gezeigten Spindel in der Spindelaufnahme 38 kann eine nicht gezeigte Backe befestigt werden. Die Spindelaufnahme 38 ist nicht durchgehend im Grundkörper 2 angeordnet, so dass der Grundkörper 2 eine in Fig. 15 nicht gezeigte, feststehende Grundbacke aufweist. Mittels der Bewegung der Spindel kann die mit der Spindel in Kontakt stehende bewegliche Backe gegen die feststehende Backe bewegt werden, um ein Werkstück zu spannen. Der Grundkörper 2 ist außen von einer Außenwandung 5 umgeben, während die Spindelaufnahme 38 von einer Innenwandung 7 umgeben ist. Fig. 16 zeigt eine Frontansicht des Schraubstocks, wobei zwischen Außenwandung 5 und Innenwandung 7 an der Unterseite des Grundkörpers 2 ein parallel zur Spindelaufnahme 38 verlaufender Hohlraum 3 ausgebildet ist. Dabei verläuft der Hohlraum 3 bis zum Ende der Spindelaufnahme 38. Der Hohlraum 3 ist mit einem Mittel zur Versteifung mittels Kompartimentierung gefüllt, d.h. der Hohlraum weist entweder einen Metallschaum oder eine Struktur auf. Fig. 18 und Fig. 19 ist zu entnehmen, dass jeder Führungsfläche 17 ein Schmierleitungssystem 31 zugeordnet ist, wobei seitlich an der Oberfläche des Grundkörpers 2 jeweils eine Zugangsöffnung 32 ausgebildet ist. Diese ist mit einer Zentralleitung 16 verbunden, die zu einer Schmierleitung 39 führt, welche parallel zur Führungsfläche 17 im Grundkörper 2 verläuft. Die Zugangsöffnung 32 und die Zentralleitung 16 sind mittig im Grundkörper 2 angeordnet, sodass die Schmierleitung 39 von der Zentralleitung 12 aus betrachtet nach rechts und links entlang der Führungsfläche 17 verläuft. Die Schmierleitungen 39 sind mehrfach verzweigt, wobei die Verzweigungen jeweils eine Führungschmieröffnung 50 aufweist, die sich zur Führungsaufnahme hin öffnet und eine Schmieröffnung 19, die sich tangential zur Spindelaufnahme 38 öffnet. Dadurch ist eine kontinuierliche Schmierung der Spindelaufnahme 38 und der Führungsaufnahme 12 möglich.

Analog zu den anderen Ausführungsbeispielen wird der Schraubstock 37 gefertigt, indem in einem ersten Schritt ein 3D-Modell des Grundkörpers 2 erstellt wird, welche die Außenwandung 5, die Innenwandung 7, die Spindelaufnahme 38, die Führungsaufnahmen 12, die Schmierleitungssysteme 31 und den Hohlraum 3 umfasst. In einem nächsten Schritt wird anhand des 3D-Modells mittels Laserschmelzen aus Metall der Grundkörper 2 schichtweise erstellt. Im nächsten Schritt werden aus Aluminium und Titanhydrid bestehende Plättchen in die Hohlräume 3 gefüllt, wobei durch Erhitzen des Grundkörpers auf ca. 500° Celsius Aluminiumschaum entsteht. Optional kann die Oberfläche an der Frontseite des Schraubstocks 37 begradigt werden und eine Abdeckplatte zum Schutz angebracht werden. Alternativ zum Metallschaum kann im Hohlraum 3 eine Struktur z.B. eine Wabenstruktur ausgebildet sein. Diese Struktur kann direkt ins 3D-Modell integrierte werden, sodass bei der Herstellung des Schraubstocks 37 anhand des 3D-Modells die Struktur zur Versteifung, d.h. z.B. die Wabenstruktur gleichzeitig mit dem Rest des Schraubstocks hergestellt wird.

### Bezugszeichenliste

- 1: Spannvorrichtung
- 2: Grundkörper
- 3: Hohlraum
- 5: Außenwandung
- 6: Bodenplatte
- 7: Innenwandung
- 9: Spannfutter
- 10: Futterkörper
- 11: Durchgang
- 12: Führungsaufnahme
- 13: Keilstangenaufnahme
- 14: Keilstangenführungsfläche
- 15: erstes Leitungssystem
- 16: Zentralleitung
- 17: Führungsfläche
- 18: Zufuhrleitung
- 19: Schmieröffnung
- 20: Reservoir
- 21: Keilstangenschmierleitung
- 22: Keilstangenschmieröffnung
- 23: zweites Leitungssystem
- 24: Zentralkanal
- 25: Zufuhrkanal
- 26: Reinigungsöffnung
- 27: Greifer
- 28: Zylinderräume
- 29: innere Führungsfläche
- 30: äußere Führungsfläche
- 31: Schmierleitungssystem
- 32: Zugangsöffnung
- 33: innere Schmierleitung
- 34: äußere Schmierleitung
- 35: innere Schmieröffnung
- 36: äußere Schmieröffnung
- 37: Schraubstock
- 38: Spindelaufnahme
- 39: Schmierleitung
- 40: Führungsschiene
- 41: kleiner Hohlraum
- 42: größerer Hohlraum
- 43: Abzweigung
- 44: Verbindung
- 45: Verbindungsleitung
- 46: Reinigungsabzweigung
- 47: Druckluftzufuhr
- 48: Kolbenstangenöffnung
- 49: Kolbenöffnung
- 50: Führungsschmieröffnung

## Patentansprüche

1. Spannvorrichtung (1) zum Spannen eines Werkstücks, mit einem Grundkörper (2) und mindestens einem relativ zum Grundkörper (2) verstellbaren Spannmittel, **dadurch gekennzeichnet, dass** im Grundkörper (2) mindestens ein Hohlraum (3) ausgebildet ist und dass im Hohlraum (3) ein Mittel zur Versteifung ausgebildet ist.

2. Spannvorrichtung (1) nach Anspruch 1, **dadurch gekennzeichnet, dass** der Grundkörper (2) schichtweise durch ein generatives Verfahren gebildet ist.

3. Spannvorrichtung (1) nach Anspruch 1 oder 2, **dadurch gekennzeichnet, dass** der Grundkörper (2) randseitig durch eine Außenwandung (5) begrenzt ist und eine Bodenplatte (6) aufweist, auf der zur Begrenzung des mindestens einen Hohlraums (3) eine Innenwandung (7) angeordnet ist.

4. Spannvorrichtung (1) nach einem der Ansprüche 1 bis 3, **dadurch gekennzeichnet, dass** das Mittel zur Versteifung durch einen Metallschaum gebildet ist.

5. Spannvorrichtung (1) nach Anspruch 4, **dadurch gekennzeichnet, dass** der Metallschaum aus einem treibmittelaktivierbaren gebildet ist, wobei das Metallpulver ausgewählt ist aus der Gruppe von: Aluminium, Aluminiumlegierungen, Kupfer, Zink, Blei, Stahl, Titan und Eisen.

6. Spannvorrichtung (1) nach Anspruch 3, **dadurch gekennzeichnet, dass** das Mittel zur Versteifung durch eine an der Innenwandung (7) angeschlossene Struktur gebildet ist.

7. Spannvorrichtung (1) als Spannfutter (9) gebildet nach einem der Ansprüche 1 bis 6, **dadurch gekennzeichnet, dass** der Grundkörper (2) als Futterkörper (10) gebildet ist, mit einer Spindelaufnahme (38) und mit mindestens zwei gleichmäßig über den Umfang verteilten, durch die Innenwandung (7) begrenzten Führungsaufnahmen (12) für die Verstellung von Spannbacken und dass zwischen der Außenwandung (5) und der Innenwandung (7) der mindestens eine Hohlraum (3) gebildet ist.

8. Spannvorrichtung (1) als Spannfutter (9) nach Anspruch 7, **dadurch gekennzeichnet, dass** jeder Führungsaufnahme (12) zwei gegenüberliegende Führungsflächen (17) zugeordnet sind, dass der Futterkörper (10) ein erstes Leitungssystem (15) zur Schmierung umfasst mit einer in Umfangsrichtung verlaufenden Zentralleitung (16), dass jeder Führungsfläche (17) eine mit der Zentralleitung (16) verbundene Zufuhrleitung (18) zugeordnet ist, die eine in Richtung der Führungsaufnahme (12) geöffnete Schmieröffnung (19) aufweist.

9. Spannvorrichtung (1) als Spannfutter (9) nach Anspruch 8, **dadurch gekennzeichnet, dass** die Zufuhrleitung (18) verzweigt ist in eine Mehrzahl von Schmieröffnungen (19).

10. Spannvorrichtung (1) als Spannfutter (9) nach Anspruch 8 oder 9, **dadurch gekennzeichnet, dass** jeder Führungsfläche (17) ein radial innenliegendes mit der Zufuhrleitung (18) verbundenes Reservoir (20) zugeordnet ist.

11. Spannvorrichtung (1) als Spannfutter (9) nach Anspruch 10, **dadurch gekennzeichnet, dass** zur automatischen Schmierung der Führungsaufnahmen (12), eine in den in den Reservoirs (20) befindliche, aufgrund der Zentrifugalkraft radial nach außen über die Zufuhrleitung (18) zur Schmieröffnung (19) drückbare Schmierflüssigkeit vorgesehen ist.

12. Spannvorrichtung (1) als Spannfutter (9) nach einem der Ansprüche 8 bis 11, **dadurch gekennzeichnet, dass** jeder Führungsaufnahme (12) tangential eine durch die Innenwandung (7) begrenzte Keilstangenaufnahme (13) mit einer Keilstange zugeordnet ist, die entlang zweier gegenüberliegender Keilstangenführungsflächen (14) bewegbar ist, dass jeder Keilstangenaufnahme (13) eine mit der Zentralleitung (16) verbundene Keilstangenschmierleitung (21) zugeordnet ist, die mindestens eine in Richtung der Keilstangenaufnahme (13) geöffnete Keilstangenschmieröffnung (22) aufweist.

13. Spannvorrichtung (1) als Spannfutter (9) nach einem der Ansprüche 7 bis 12, **dadurch gekennzeichnet, dass** der Futterkörper (10) ein zweites Leitungssystem (23) zur Reinigung umfasst, mit einem in Umfangsrichtung verlaufenden Zentralkanal (24), dass jeder Führungsfläche (17) jeweils ein mit dem Zentralkanal (24) verbundener Zufuhrkanal (25) zugeordnet ist, der eine sich in Richtung Führungsaufnahme (12) öffnende Reinigungsöffnung (26) aufweist.

14. Spannvorrichtung (1) als Spannfutter (9) nach Anspruch 13, **dadurch gekennzeichnet, dass** der Zufuhrkanal (25) verzweigt ist in eine Mehrzahl von Reinigungsöffnungen (26).

15. Spannvorrichtung (1) als Greifer (27) nach einem der Ansprüche 1 bis 6, **dadurch gekennzeichnet, dass** der Grundkörper (2) quaderförmig gebildet ist, mit im Grundkörper (2) ausgebildeten, durch eine Innenwandung (7) begrenzten Zylinderräumen (28) und dass zwischen der Außenwandung (5) und der Innenwandung (7) der mindestens eine Hohlraum (3) angeordnet ist.

16. Spannvorrichtung (1) als Greifer (27) nach Anspruch 15, **dadurch gekennzeichnet dass** im Grundkörper (2) zwei parallel verlaufende Führungsaufnahmen (12) mit jeweils einer inneren Führungsfläche (29) und einer äußeren Führungsfläche (3) ausgebildet sind, dass jeder Führungsaufnahme (12) mindestens ein Schmierleitungssystem (31) zugeordnet ist, mit einer eine Zugangsöffnung (32) an der Oberfläche des Grundkörpers (2) aufweisenden Zentralleitung (16), die mit einer inneren Schmierleitung (33) und mit einer äußeren Schmierleitung (34) verbunden ist, wobei die innere Schmierleitung (33) eine zur inneren Führungsfläche (29) geöffnete innere Schmieröffnung (35) und die äußere Schmierleitung (34) eine zur äußeren Führungsfläche (30) geöffnete äußere Schmieröffnung (36) aufweist.

17. Spannvorrichtung (1) als Schraubstock (37) nach einem der Ansprüche 1 bis 6, **dadurch gekennzeichnet, dass** der Grundkörper (2) eine Spindelaufnahme (38) zur Verstellung von Backen aufweist und dass zwischen der Spindelaufnahme (38) und der Außenwandung (5) an einer Unterseite des Grundkörpers mindestens ein parallel zur Spindelaufnahme (38) verlaufender Hohlraum (3) ausgebildet ist.

18. Spannvorrichtung (1) als Schraubstock (37) nach Anspruch 17, **dadurch gekennzeichnet, dass** in der Spindelaufnahme (38) eine Führungsaufnahme (12) angeordnet ist, der zwei gegenüberliegende Führungsflächen (17) zugeordnet sind, dass jeder Führungsfläche (17) ein Schmierleitungssystem (31) mit einer, eine Zugangsöffnung (32) an der Oberfläche des Grundkörpers aufweisenden, Zentralleitung (16) zugeordnet ist, die mit einer Schmierleitung (39) verbunden ist, wobei die Schmierleitung (39) eine zur Führungsaufnahme (12) geöffnete Schmieröffnung (40) aufweist.
